**Europäisches Patentamt**

**European Patent Office**

**Office européen des brevets**

(19)

(11) Veröffentlichungsnummer: **0 288 842 B1**

(12) # EUROPÄISCHE PATENTSCHRIFT

(45) Veröffentlichungstag der Patentschrift: **10.07.91**

(21) Anmeldenummer: **88106023.0**

(22) Anmeldetag: **15.04.88**

(51) Int. Cl.⁵: **E02F 3/88**, E02F 3/90,
E02F 9/26, F16L 3/00,
F16L 39/00

(54) **Verbindung von auf einem Schiffsrumpf eines Nassbaggers angeordneten Druckluftleitungen mit am Saugrohr des Nassbaggers verlegten Druckluftleitungen.**

(30) Priorität: **29.04.87 DE 3714220**

(43) Veröffentlichungstag der Anmeldung:
**02.11.88 Patentblatt 88/44**

(45) Bekanntmachung des Hinweises auf die
Patenterteilung:
**10.07.91 Patentblatt 91/28**

(84) Benannte Vertragsstaaten:
**BE FR GB NL**

(56) Entgegenhaltungen:
**EP-A- 0 167 675      DE-A- 2 818 028
DE-A- 3 002 750      FR-A- 2 263 448
US-A- 3 263 615      US-A- 3 772 805**

**PATENT ABSTRACTS OF JAPAN, Band 8, Nr.
140 (M-305)[1577], 29. Juni 1984; & JP-A-59 38
432 (MITSUBISHI JUKOGYO K.K.) 02-03-1984**

(73) Patentinhaber: **O & K Orenstein & Koppel Aktiengesellschaft**

**W-1000 Berlin(DE)**

(72) Erfinder: **Johannsen, Karl, Dipl.-Ing.
An der Bäk 19b
W-2400 Lübeck-Travemünde(DE)**

## Beschreibung

Verbindung von auf einem Schiffsrumpf eines Naßbaggers angeordneten Druckluftleitungen mit am Saugrohr des Naßbaggers verlegten Druckluftleitungen.

Die Erfindung betrifft eine Verbindung von auf einem Schiffskörper von Naßbaggern angeordneten, zu Meßgeräten, Steuergeräten oder dergleichen führenden Luftleitungen mit am Saugrohr des Naßbaggers verlegten Luftleitungen u. a. für Saugrohrstellungsmeßanlagen für die Betätigung von pneumatischen Antrieben von am Saugrohr angeordneten Absperrklappen und anderem (siehe DE-A-2 818 028).

Es sind pneumatische Meßanlagen für Saugrohrstellung und Baggertiefe bekannt, die mit Luftspeisegeräten versehen sind, welche Meßluft zu mehreren Stellen am Saugrohr führt. Dazu sind auf dem Saugrohr mehrere Meßleitungen verlegt, die an unterschiedlichen Stellen des Saugrohres enden.

Mit dieser Anlage werden die statischen Drücke am Ende der Druckluftmeßleitung gemessen und zu einem Saugrohrstellungszeiger übertragen. Diese Meßanlage kann mit mehreren - z. B. drei - Meßsystemen versehen sein. Unter Einfluß der gemessenen Drücke werden im Saugrohrstellungsanzeiger an einem Saugrohrmodell die Stellung des Saugrohres unter Wasser wiedergegeben, so daß sofort die jeweilige Stellung des Saugrohres unter Wasser erkannt werden kann. Der Saugrohrstellungsanzeiger kann im Steuerhaus oder an anderer Stelle des Naßbaggers angeordnet sein. Bei den bekannten Anlagen (siehe z.B. DE-A-2 818 028) sind die am Saugrohr befestigten Meßleitungen über elastische Schläuche mit dem Luftspeisegerät verbunden, wobei im Bereich der Gleitplatte die Überführung vom Schiff auf das vertikal verfahrbare Saugrohr die Schläuche über Schlauchwinden, Schlauchtrommeln oder dergleichen geführt werden, die zum Auf-bzw. Abwickeln der Schläuche dienen.

Des weiteren ist bekannt, am Saugrohr eine Absperrklappe anzuordnen, die mit einem pneumatischen Antrieb ausgerüstet ist. Dieser pneumatische Antrieb wird über eine Druckleitung gesteuert, die in gleicher Weise über elastische Schläuche mit einem Druckluftsteuergerät verbunden ist. Diese Schläuche sind ihrerseits wieder über Schlauchwinden der angegebenen Art geführt. Die Absperrklappe ermöglicht bei einem Verstopfen des Saugkopfes den Eintritt von Umgebungswasser, um Unterbrechungen und Störungen in der Förderanlage zu vermeiden.

Die Schlauchwinden, Schlauchtrommeln oder anders ausgebildete Aufwickelgeräte für Schläuche sind an geeigneter Stelle am Schiffskörper anzubringen. Nachteilig ist die Störanfälligkeit durch die von Deck nach außenbords durch das Wasser auf die Saugrohre geführten freihängenden Schläuche. Bei Störungen in der Schlauchführung ergeben sich Ausfallzeiten für den Bagger.

Der Erfindung liegt die Aufgabe zugrunde, eine Verbindung von auf einem Schiffsrumpf eines Naßbaggers angeordneten, zu Meßgeräten, Steuergeräten und dergleichen führenden Luftleitungen u. ä. zu schaffen, die nicht durch freihängende Schläuche störanfällig und betriebssicherer ist. Die Erfindung löst die gestellte Aufgabe durch die Merkmale des Hauptanspruchs. Bevorzugte Ausführungsform sind die Bestandteile der Unteransprüche.

Mit Hilfe der erfindungsgemäßen Luftkupplung wird eine Verbindung zwischen den auf dem Saugrohr befestigten Leitungen und den an Bord des Schiffes angeordneten zum Luftspeisegerät und zu dem Steuergerät führenden Luftleitungen hergestellt, wenn sich das Saugrohr in Arbeitsstellung befindet.

Bei der Ausführungsform nach Anspruch 2 wird die Kupplung automatisch beim Einstellen der den Saugrohrkrümmer tragenden Gleitplatte in die Arbeitsstellung hergestellt. Die Luftkupplung ist dann geschlossen, wenn sich das Saugrohr mit seiner Gleitplatte in Betriebsstellung befindet. Andererseits wird bei geöffneter Luftkupplung, wenn also der Rohrkrümmer aus der Arbeitsstellung herausgezogen ist, ein Austreten der Luft verhindert.

Durch die Erfindung ergibt sich der Vorteil, daß die am Schiff anzuordnenden Schlauchwinden, Schlauchtrommeln und vor allem die freihängenden durch das Wasser geführten Schläuche vermieden werden. Damit entfallen alle Gefahren, die durch solche freihängenden Bauteile beim Betrieb eines Baggers auftreten können, z. B. die Gefahr des Abreißens der freihängenden Schläuche durch Eisgang, Strömung oder Treibgut. Ein weiterer Vorteil ergibt sich dadurch, daß die Luftleitungen erheblich verkürzt werden. Bei der Erfindung entfallen somit auch alle Bauteile, die ansonsten für die Aufhängung oder Anbringung von freihängenden Schläuchen, Schlauchwinden, Schlauchtrommeln oder dergleichen notwendig sind.

Mit der erfindungsgemäßen Luftkupplung können nicht nur die Meßleitungen für die Saugrohrstellungsmeßanlagen oder die Druckleitungen für die Betätigung der Absperrklappe, sondern auch noch andere Luftleitungen gekuppelt werden, die beim Betrieb eines Saugrohres Verwendung finden können, wie z. B. zum pneumatischem Antrieb von Schneidwalzen oder dergleichen, die am Saugkopf oder an anderer Stelle des Saugrohres befestigt sind.

Weitere Einzelheiten der Erfindung sind Gegenstand der Unteransprüche, die besonders zweckmäßige Ausführungsformen zeigen.

Die Erfindung ist anhand der in den Zeichnungen dargestellten Ausführungsbeispiele erläutert, und zwar zeigen

Fig. 1 den allgemeinen Aufbau einer erfindungsgemäßen Vorrichtung anhand einer scheamtischen Seitenansicht eines Naßbaggers mit abgesenktem Saugrohr.

Fig. 2 eine Seitenansicht der Führung der Gleitplatte für den Saugrohrkrümmer, wobei an die Gleitplatte mittels einer Halterung ein Kupplungsbauteil befestigt ist.

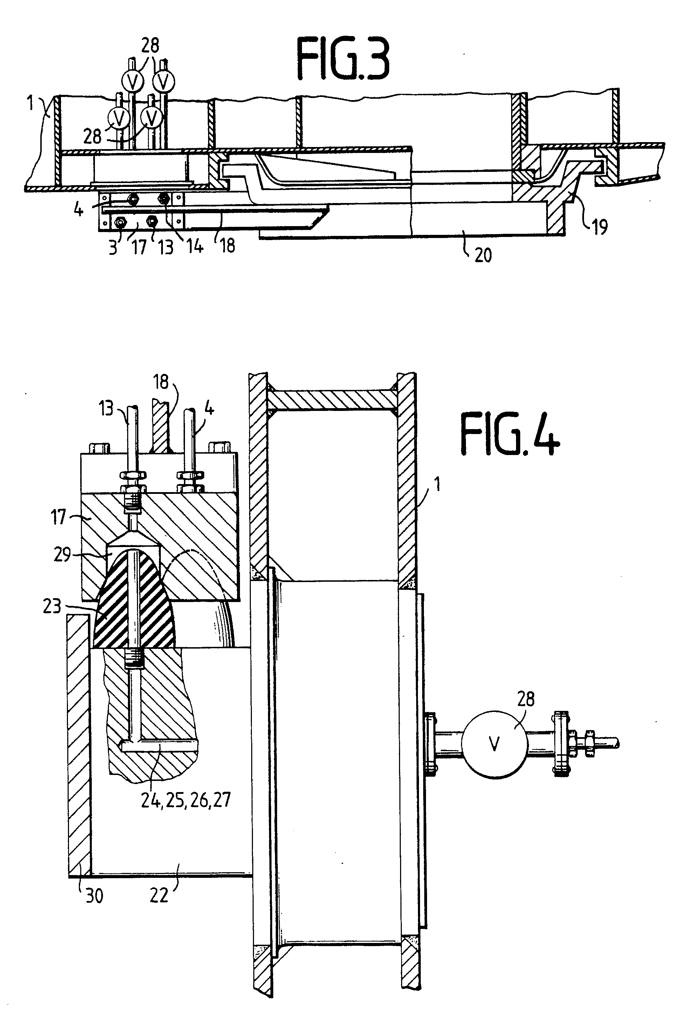

Fig 3 einen Schnitt in der Ebene A-A nach Fig. 2 im vergrößerten Maßstab.

Fig. 4 einen Schnitt in der Ebene B-B ebenfalls im vergrößerten Maßstab.

Fig. 5 eine andere Ausführungsform entsprechend der Darstellung in Fig. 2, ebenfalls im vergrößerten Maßstab.

Fig. 6 einen Schnitt in der Ebene C-C nach Fig. 5 und

Fig. 7 eine Luftkupplung nach Fig. 6 in vergrößerter Darstellung.

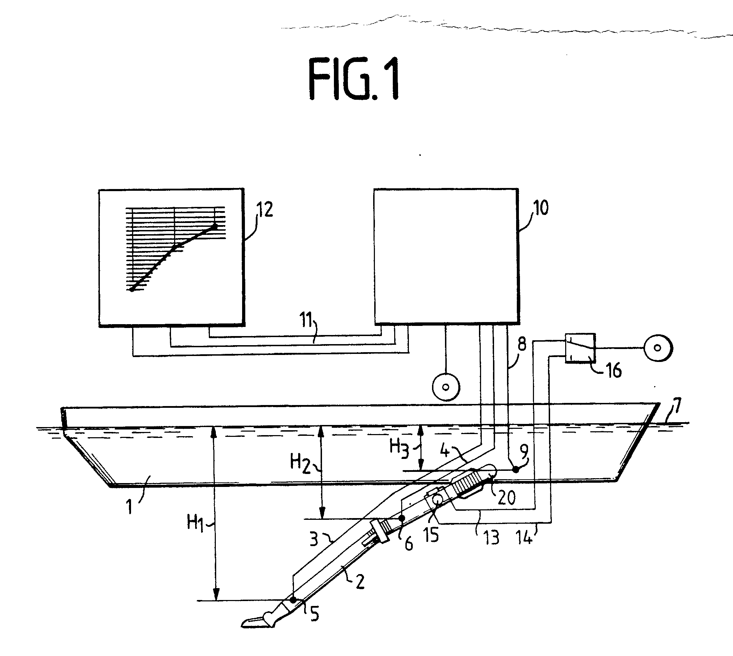

Der Schiffskörper 1 des Naßbaggers trägt an seiner Seite das in Fig. 1 in Betriebsstellung dargestellte abgesenkte Saugrohr 2. An diesem sind mehrere Meßluftleitungen 3 und 4 fest verlegt, die bei 5 und 6 - den eigentlichen Meßstellen - frei im Wasser enden. Diese Meßstellen liegen in den Höhen H 1 und H 2 unterhalb der Wasserlinie 7.

Es ist noch eine dritte Meßluftleitung 8 vorgesehen, die an einer Meßstelle 9 endet, die fest am Schiffskörper 1 angeordnet ist. Diese liegt in der Höhe H 3 unter der Wasserlinie 7.

Die Meßluftleitungen 3, 4 und 8 führen über die erfindungsgemäßen und späterhin beschriebenen Kupplungsstecker zu dem Luftspeisegerät 10, das auf dem Schiffskörper 1 angeordnet ist und das seinerseits über die Leitungen 11 mit einem Saugrohrmodell 12 verbunden ist. Dieses Saugrohrmodell 12 gibt die Stellung des Saugrohres 2 unter Wasser wieder.

Am oberen Teil des Saugrohres 2 sind zwei weitere Druckluftleitungen 13 und 14 befestigt, die zum Antrieb der Absperrklappe 15 führen. Diese Druckluftleitungen 13, 14 führen zu dem auf dem Schiff angeordneten Steuergerät 16.

Alle Luftleitungen 3,4,13,14 führen zu dem Kupplungsbauteil 17, das über eine Halterung 18 mit der Gleitplatte 19 verbunden ist.

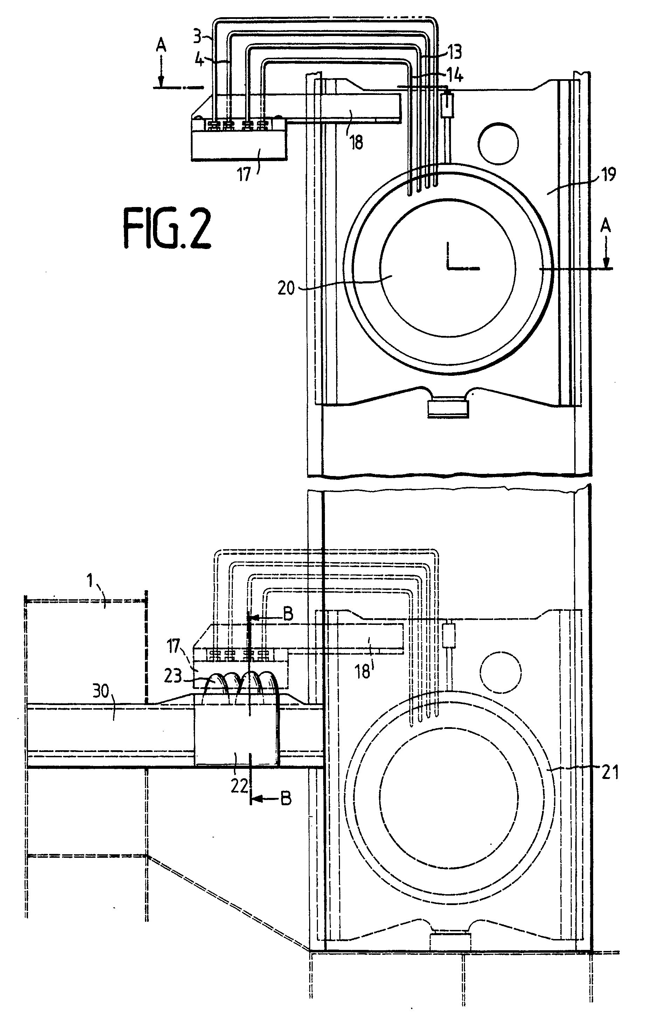

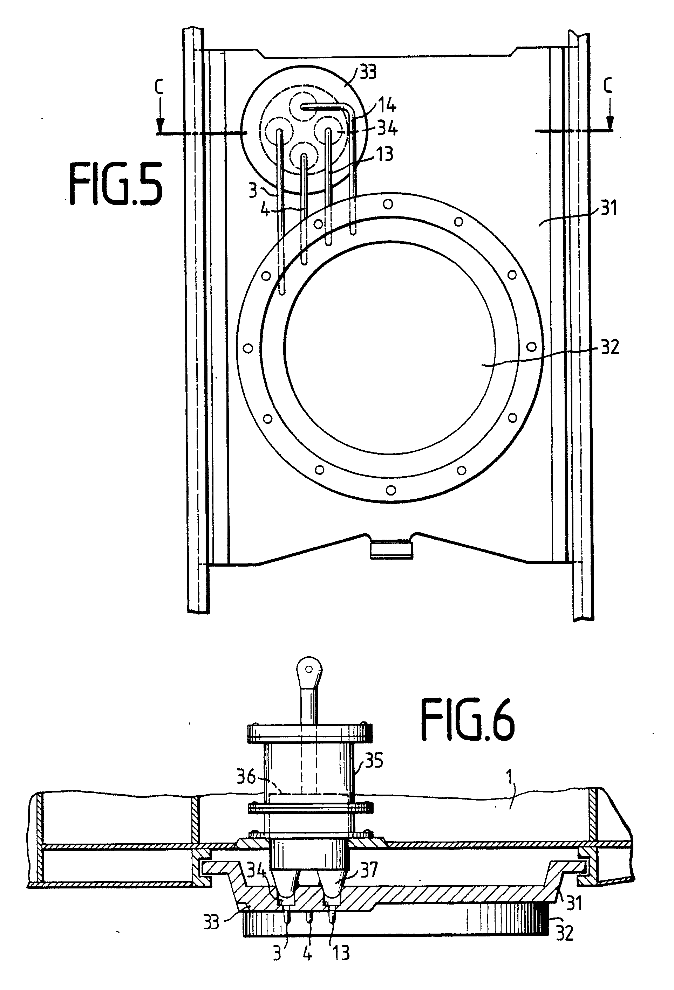

Wenn die Gleitplatte 19 in die Betriebsstellung 21 von oben nach unten gemäß Fig. 2 heruntergeführt wird, kommt das Kupplungsbauteil 17 mit dem Kupplungsgegenstück 22 in Kupplungsstellung, die in Fig. 4 in vergrößerter Darstellung gezeigt ist. Das Kupplungsbauteil 17 ist in Fig. 2 in gekuppelter Betriebsstellung gestrichelt angedeutet.

Das Kupplungsgegenstück 22 ist mit steckerartigen, elastischen Bauteilen 23 versehen, die in die hülsenförmig endenden Gegenstücke 29 am Kupplungsbauteil 17 hineinragen. Die steckerartigen Bauteile 23 sind durchbohrt. In ihnen enden die Luftleitungen 24,25,26,27, die auf dem Schiffskörper 1 fest verlegt sind und von denen zwei zum Meßgerät 10 und zwei zum Steuergerät 16 führen.

In die Luftleitungen 24 bis 27 sind Absperrventile 28 eingebaut.

Im Ausführungsbeispiel sind die steckerartigen Bauteile 23 konisch ausgebildet und greifen in entsprechend ausgebildete Gegenstücke 29 des Kupplungsbauteils 17 ein. An Stelle dieser Verbindungsart können auch andere Kupplungsverbindungen treten.

Die Luftleitungen und die Kupplungen sind so ausgebildet, daß sie den gewünschten Steuerdrücken oder Meßdrücken entsprechen. Diese bewegen sich zwischen etwa 1 - 10 bar. Natürlich können die Kupplungsbauteile auch für andere Drücke ausgebildet sein.

Das Kupplungsgegenstück 22 ist über einen Flansch 30 am Schiffskörper 1 befestigt.

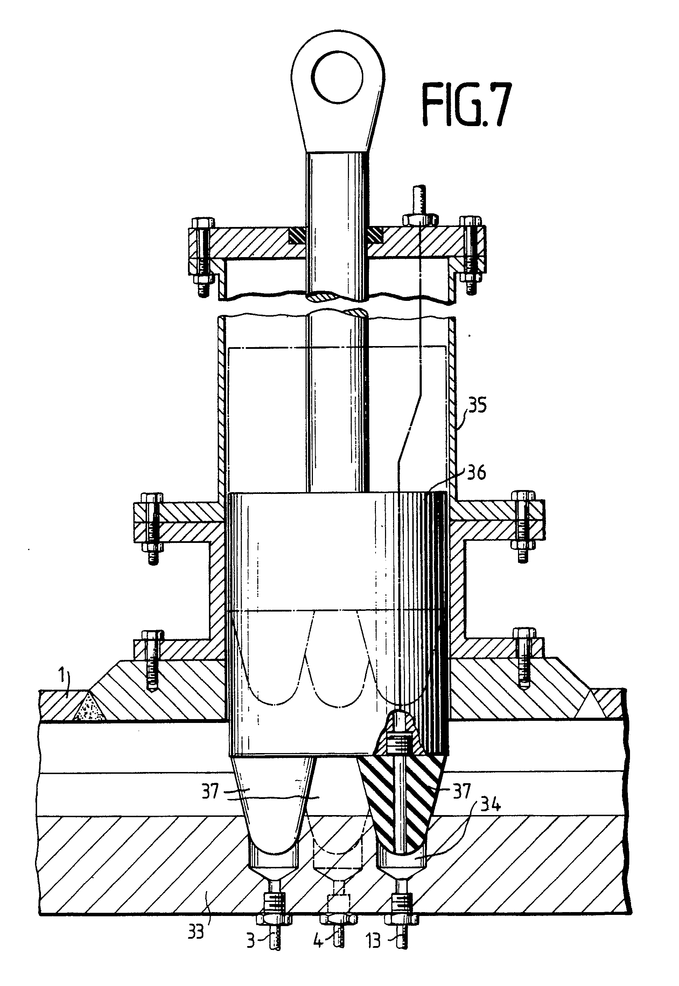

Die Kupplungsvorrichtung gemäß Fig. 5 bis 7 unterscheidet sich von der vorbeschriebenen im wesentlichen dadurch, daß die Kupplungsbauteile in horizontaler Richtung arbeiten. Dazu ist an der Gleitplatte 31 des Saugrohrkrümmers 32 ein Kupplungsstück 33 angeordnet, das mit hülsenförmigen bzw. konisch gestalteten Kupplungsöffnungen 34 versehen ist, in die die am Saugrohr 2 verlegten Luftleitungen 3,4,13,14 enden.

Am Schiffskörper 1 ist ein horizontal liegendes Kupplungsgegenstück 35 befestigt, das ein horizontal verschiebbares Bauteil 36 enthält, das auf seiner Vorderseite mit vier steckerartigen Bauteilen 37 versehen ist, die in gleicher Weise wie die steckerartigen Bauteile 23 ausgebildet sein können. In der gestrichelten Darstellung (Fig. 5) sind die steckerartigen Bauteile 37 in zurückgezogener Stellung dargestellt, so daß die Gleitplatte 31 aus der Betriebsstellung bewegt werden kann. Diese steckerartigen Bauteile 37 sind ebenfalls durchbohrt und mit den Luftleitungen 3,4,13,14 verbunden, die den Luftleitungen 24 bis 27 des vorher beschriebenen Ausführungsbeispieles entsprechen und die am Schiffskörper 1 fest verlegt sind und zu dem Luftspeisegerät 10 bzw. dem Steuergerät 16 führen.

## Ansprüche

1. Verbindung von auf einem Schiffskörper (1) eines Naßbaggers angeordneten, zu Meßgeräten (10), Steuergeräten (16) oder dgl. führenden Luftleitungen (24,25,26,27) mit am Saugrohr (2) des Naßbaggers verlegten Luftleitungen (3,4,13,14) u.a. für Saugrohrstellungsmeßanlagen für die Betätigung von pneumatischen Antrieben von am Saugrohr (2) angeordneten Absperrklappen (15) und anderen, dadurch gekennzeichnet, daß die an dem Saugrohr (2) verlegten Meßluftleitungen (3,4) mit einem an der Gleitplatte (19) des Saugrohrkrümmers (20) befestigten Kupplungsbauteil (17) verbunden sind und daß andererseits am Schiffskörper (1) im Bereich der Gleitplatte (19) ein Kupplungsgegenstück (22) befestigt ist, von dem aus zur Verbindung mit den am Saugrohr (2) befestigten Luftleitungen (3,4,13,14) weitere Luftleitungen zu den an Bord des Schiffskörpers (1) angeordneten Geräten, wie Luftspeisegeräten (10), Steuergeräten (16) oder dgl. führen.

2. Verbindung für am Saugrohr von Naßbaggern verlegte Luftleitungen nach Anspruch 1, dadurch gekennzeichnet, daß die Gleitplatte (19) mit einer Halterung (18) zur Befestigung eines in Bewegungsrichtung der Gleitplatte (19) beweglichen Kupplungsbauteiles (17) versehen ist und daß im Bereich der Gleitplatte (19) in der Betriebsstellung am Schiffskörper (1) ein Kupplungsgegenstück (22) befestigt ist, so daß die beiden Kupplungsstücke (17,22) in Betriebsstellung des Saugrohres (2) miteinander gekuppelt sind.

3. Verbindung für am Saugrohr von Naßbaggern verlegte Luftleitungen nach Anspruch 1, dadurch gekennzeichnet, daß an der Gleitplatte (31) Kupplungsstücke (33) befestigt sind und im Bereich der Gleitplatte (31) in der Betriebsstellung am Schiffskörper (1) ein horizontal verfahrbares Kupplungsgegenstück (36) befestigt ist, das in der Betriebsstellung der Gleitplatte (31) in das an der Gleitplatte (31) befestigte Kupplungsstück (33) einfahrbar ist.

4. Verbindung für am Saugrohr von Naßbaggern verlegte Luftleitungen nach den Ansprüchen 1 bis 3, dadurch gekennzeichnet, daß die Kupplungen steckerartig ausgebildet sind und daß durch die steckerartigen Bauteile (23,37) die Luft geführt wird.

5. Verbindung für am Saugrohr von Naßbaggern verlegte Luftleitungen nach Anspruch 4, dadurch gekennzeichnet, daß die steckerartigen Bauteile (23,37) aus elastischem Material bestehen.

6. Verbindung für am Saugrohr von Naßbaggern verlegte Luftleitungen nach den Ansprüchen 1 bis 5, dadurch gekennzeichnet, daß in den an Bord verlegten Luftleitungen (24,25,26,27) Absperrventile (28) angeordnet sind.

7. Verbindung für am Saugrohr von Naßbaggern verlegte Luftleitungen nach Anspruch 6, dadurch gekennzeichnet, daß die im Schiffskörper (1) angeordneten Luftleitungen mit Ventilen versehen sind, die beim Kuppeln bzw. Entkuppeln der beiden Kupplungsgegenstücke (17,22,33,35) automatisch geöffnet bzw. geschlossen werden.

8. Verbindung für am Saugrohr von Naßbaggern verlegte Luftleitungen nach den Ansprüchen 1 bis 7, dadurch gekennzeichnet, daß das die steckerartigen Bauteile (23) tragende Kupplungsgegenstück (22) über eine Halterung als bewegliches Kupplungsteil an der Gleitplatte (19) befestigt ist und daß im Bereich der Gleitplatte (19) in der Betriebsstellung am Schiffskörper (1) das andere Kupplungsbauteil (17) angeordnet ist, so daß die beiden Kupplungsstücke (17,22) in Betriebsstellung des Saugrohres (2) miteinander gekuppelt sind.

## Claims

1. Coupling of air lines (24,25,26,27), arranged on the hull (1) of a floating dredger and leading to measuring apparatuses (10), control apparatuses (16) or the like, to air lines (3,4,13,14) located on the suction pipe (2) of the floating dredger for, among other things, suction pipe position measuring installations for the actuation of pneumatic drives of shut-off valves (15) and the like arranged on the suction pipe (2), characterised in that the measuring air lines (3,4) located on the suction pipe (2) are connected to a coupling component (17) attached to the sliding plate (19) of the suction pipe elbow (20) and that on the other hand on the hull (1) in the region of the sliding plate (19) there is fastened a complementary coupling member (22) from which, for connection with the air lines (3,4,13,14) attached to the suction pipe (2), further air lines lead to the apparatuses, such as air supply apparatuses (10), control apparatuses (16) or the like arranged on board the hull (1).

2. Coupling for air lines, located on the suction pipe of floating dredgers, according to Claim 1, characterised in that the sliding plate (19) is provided with a retaining means (18) for the attachment of a coupling component (17) which is movable in the direction of movement of the sliding plate (19), and that in the region of the sliding plate (19) in the operating position a complementary coupling member (22) is attached to the hull (1) so that the two coupling members (17,22) are coupled to each other when the suction pipe (2) is in the operating position.

3. Coupling for air lines, located on the suction pipe of floating dredgers, according to Claim 1, characterised in that coupling members (33) are attached to the sliding plate (31) and in the region of the sliding plate (31) in the operating position there is attached to the hull (1) a horizontally movable complementary coupling member (36) which when the sliding plate (31) is in the operating position can be introduced into the coupling member (33) attached to the sliding plate (31).

4. Coupling for air lines, located on the suction pipe of floating dredgers, according to Claims 1 to 3, characterised in that the couplings are plug-like and that the air is led through the plug-like components (23,37).

5. Coupling for air lines, located on the suction pipe of floating dredgers, according to Claim 4, characterised in that the plug-like components consist of resilient material (23,37).

6. Coupling for air lines, located on the suction pipe of floating dredgers, according to Claims 1 to 5, characterised in that shut-off valves (28) are arranged in the air lines (24,25,26,27) located on board.

7. Coupling for air lines, located on the suction pipe of floating dredgers, according to Claim 6, characterised in that the air lines arranged in the hull (1) are provided with valves which are automatically opened and closed when the two complementary coupling members (17,22,33,35) are respectively coupled or uncoupled.

8. Coupling for air lines, located on the suction pipe of floating dredgers, according to Claims 1 to 7, characterised in that the complementary coupling member (22) carrying the plug-like components (23) is attached to the sliding plate (19), as the movable coupling member, by way of a retaining means and that the other coupling component (17) is arranged on the hull (1) in the region of the sliding plate (19) in the operating position so that the two coupling members (17,22) are coupled to each other when the suction pipe (2) is in the operating position.

**Revendications**

1. Jonction entre des canalisations d'air (24,25,26,27) disposées sur la coque (1) d'un bateau-drague, menant à des appareils de mesure (10), des groupes de commande (16) ou autres et des canalisations d'air (3,4,13,14) posées sur le tuyau d'aspiration (2) de la drague entre autre pour des installations de mesure de la position du tube d'aspiration pour la commande d'entraînements pneumatiques de clapets d'arrêt (15) disposés sur le tuyau d'aspiration (2) et autres, caractérisée en ce que les canalisations d'air (3,4) posées sur le tuyau d'aspiration (2) sont reliées à un bloc d'accouplement (17) fixé sur la plaque coulissante (19) du raccord d'aspiration (20) et que d'autre part, un pendant du couplage (22) est fixé à la coque (1) dans le secteur de la plaque coulissante (19), pendant à partir duquel d'autres canalisations d'air mènent aux appareils disposés sur le bateau (1), tels que les appareils d'alimentation en air (10), les groupes de commande (16) ou autre, pour relier les canalisations fixées sur le tuyau d'aspiration (2).

2. Jonction pour des canalisations d'air posées sur le tuyau d'aspiration de dragues selon la revendication 1, caractérisée en ce que la plaque coulissante (19) est pourvue d'un support (18) servant à fixer un bloc d'accouplement (17) mobile dans le sens de mouvement de la plaque coulissante (19) et en ce que un pendant d'accouplement (22) est fixé à la coque (1) dans le secteur de la plaque coulissante (19) en position de marche, de sorte que les deux blocs d'accouplement (17,22) sont couplés les uns aux autres en position de marche du tuyau d'aspiration (2).

3. Jonction pour des canalisations d'air posées sur le tuyau d'aspiration de dragues selon la revendication 1, caractérisée en ce que des raccords (33) sont fixés sur la plaque coulissante (31) et que un pendant de couplage (36) déplaçable horizontalement est fixé à la coque (1) dans le secteur de la plaque coulissante (31) en position de marche, pendant pouvant être inséré dans le raccord (33) fixé à la plaque coulissante (31), lorsque celle-ci est en position de marche.

4. Jonction pour des canalisations d'air posées sur le tuyau d'aspiration de dragues selon les revendications 1, 2 et 3, caractérisée en ce que les couplages ont la forme de fiches et que l'air est dirigé à travers les éléments en forme de fiches (23, 37).

5. Jonction pour des canalisations d'air posées sur le tuyau d'aspiration de dragues selon la revendication 4, caractérisée en ce que les éléments en forme de fiches (23,37) sont réalisés dans un matériau souple.

6. Jonction pour des canalisations d'air posées sur le tuyau d'aspiration de dragues selon les revendications 1, 2, 3, 4 et 5, caractérisée en ce que des clapets d'arrêt (28) sont disposés dans les canalisations d'air posées sur le bateau (24,25,26,27).

7. Jonction pour des canalisations d'air posées sur le tuyau d'aspiration de dragues selon la revendication 6, caractérisée en ce que les canalisations d'air disposées dans la coque (1) sont pourvues de clapets, se fermant et/ou s'ouvrant automatiquement lors de l'accouplement ou du désaccouplement des deux pendants de couplage (17,22,33,35).

8. Jonction pour des canalisations d'air posées sur le tuyau d'aspiration de dragues selon les revendications 1, 2, 3, 4, 5, 6 et 7, caractérisée en ce que le pendant d'accouplement supportant les éléments en forme de fiches (23) est fixé en tant que demi-accouplement mobile à la plaque coulissante (19) au moyen d'un support et que l'autre bloc d'accouplement (17) est disposé sur la coque (1) dans le secteur de la plaque coulissante (19) dans la position de marche, de sorte que les deux demi-accouplements (17,22) sont accouplés les uns aux autres en position de marche du tuyau d'aspiration (2).

# FIG.1

FIG.2

# FIG.3

# FIG.4

FIG.5

FIG.6

FIG.7